# EUROPEAN PATENT APPLICATION

(11) **EP 4 194 425 A1**
(43) Date of publication of application: **14.06.2023**
(21) Application number: 21213400.1
(22) Date of filing: 09.12.2021
(51) Int. Cl.: C04B 35/16, C04B 28/26, C04B 38/00, B01J 13/00, C01B 33/141, C01B 33/152, C01B 33/158, C04B 35/622, C04B 35/626, C04B 35/634, B33Y 10/00, B33Y 70/00, C04B 35/76, C04B 35/80, C04B 35/82, C04B 35/624, C04B 111/28

(54) **ECO-FRIENDLY SIMPLE PROCESSING OF PURE ALKALI SILICATE CONSTRUCTION PARTS BASED ON WATER-GLASS**

(71) Applicant: Technische Universität Berlin, 10623 Berlin (DE)
(72) Inventor: YANG, Liu, 10627 Berlin (DE); FLECK, Claudia, 14476 Potsdam OT Golm (DE); GÖRKE, Oliver, 10717 Berlin (DE)
(74) Representative: Hertin und Partner Rechts- und Patentanwälte PartG mbB

(57) **Abstract**

In a first aspect, the invention relates to a method of making a porous or non-porous three-dimensional structure. To this end, a silicate-water solution is first formed and then contacted with a first alcohol, whereby a gel can be provided. Thereafter, the gel is transferred to an additive manufacturing apparatus and a build part is created Finally, drying and/or heat treatment takes place, in particular to obtain a desired porosity and/or phase composition.

In a further aspect, the invention relates to a porous or non-porous three-dimensional structure produced according to the process of the invention.

In an additional aspect, the invention relates to a use of the porous or non-porous three-dimensional structure. The porous parts or a hierarchical porous part can be used as a bone implant, in tissue engineering, for thermal insulation, fire prevention, heat protection, gas or blood filters, light weight parts and/or catalyst supports or other scenarios where the porosity is necessary. The non-porous parts can be used as packaging, construction parts or other scenarios where the pores should be avoided.

## Description

In a first aspect, the invention relates to a method for producing a porous or non-porous three-dimensional structure. To this end, a silicate-water solution is first formed and then contacted with a first alcohol, whereby a gel can be provided. Thereafter, the gel is transferred to an additive manufacturing apparatus, and a build part is created. Finally, drying and/or heat treatment takes place, in particular to obtain a desired porosity and/or phase composition.

In a further aspect, the invention relates to a porous or non-porous three-dimensional structure produced according to the method of the invention.

In an additional aspect, the invention relates to an use of the porous or non-porous three-dimensional structure. The porous parts or a hierarchical porous part can be used as a bone implant, in tissue engineering, for thermal insulation, fire prevention, heat protection, gas or blood filters, lightweight parts and/or catalyst supports or other scenarios where the porosity is necessary. On the other hand, the non-porous parts can be used as packaging, architecture components or other scenarios where the pores should be avoided.

### Background and state of the art

Silica aerogels are highly mesoporous materials composed of interconnected silica backbones. Due to their porous nanostructures with air pockets, they have high specific surface areas, low densities and low thermal conductivities. Thus, owing to their unique properties, silica aerogels have been widely applied in various industries as catalysts, absorbents and heat-insulating materials

Usually, silica aerogels are prepared for technical applications by using organic additives such as alkoxide precursors, for example, tetramethyl orthosilicate or tetraethyl orthosilicate. It is also known to perform processes such as sol-gel reactions or supercritical drying processes. These require special devices that operate under high pressure to maintain porosity without shrinkage. In the prior art, various processes and possibilities are known to provide silicate derived silica gels or silicate gels.

In Einarsud and Nilsen (1998), ways to prepare aerogels by drying at ambient pressure with inexpensive precursors as alkoxides are presented. In particular, sodium silicate-based gels were investigated. To provide the gel, sodium silicate was mixed with an ion exchanger. Ammonia hydroxide (NH₄OH) was then added until a pH of 4.6 was obtained. The gels were poured into Teflon tubes and stored at 50°C for one hour. After gel formation, this was stored in a solution comprising tetraethyl orthosilicate (TEOS)/ethanol. The use of colloidal silicate sols was also investigated. The methods presented in Einarsud and Nilsen (1998) are praised as simple and easy ways to increase the stiffness and strength of the gels. Water glass-based gels showed a more than 10-fold increase in shear strength.

In Sarawade et al. (2010), a method for preparing transparent, mesoporous silicate-based aerogel beads is disclosed. The beads are prepared by acid-base sol-gel polymerization of sodium silicate in an aqueous ammonia solution using the ball drop method. In this process, sodium silicate is first contacted with acetic acid and constantly mixed at room temperature to form a silicate sol with proper pH value. This is dropped into an aqueous ammonia solution, whereupon gelation takes place, and the gel is thus formed. The silicate beads obtained are then immersed in an aqueous ammonia solution for two hours. To modify the surface of the silicate beads, contacting with a solution comprising ethanol, N-hexane and trichloromethylsilane (TMCS) takes place. Finally, drying at ambient pressure is performed to obtain the hydrophobic silica aerogel beads. In particular, it was found that the surface area and pore volume can be increased by increasing the amount of TMCS.

In Shao et al. (2013), a method for preparing a superhydrophobic silica aerogel is disclosed. For this purpose, sodium silicate is treated by drying at ambient pressure. First, sodium impurities are removed by mixing sodium silicate with the precursor methyltriethoxysilane (MTES) followed by an ion exchange process. The hydrogel is then formed. An alcohol gel is obtained by alcoholization of the hydrogel. The surface of the alcogel is modified by a reaction with trimethylchlorosilane (TMCS) diluted in n-hexane. As a result, the silica aerogel obtained exhibits excellent physical properties in terms of volume shrinkage, density, surface area, pore volume, optical transmittance and hydrophobicity.

US 3,202,214 discloses the composition for a gel consisting essentially of an aqueous sodium silicate solution and a gelling agent. The gelling agent is selected from a group consisting of esters and lactones capable of undergoing hydrolysis in the presence of the sodium silicate solution and reducing agent-oxidizing agent mixtures capable of undergoing an oxidation-reduction reaction in the presence of the sodium silicate solution.

The prior art documents use water glass as a starting product and a hydrogel comprising water glass as an intermediate product. However, the final product does not contain water glass. Moreover, no further treatment or application of the final product of these processes is developed. Further treatment by other processes, such as shaping, is not feasible or very difficult to implement due to the rheological properties.

In Ren et al. (2019), novel gel materials are proposed for fire prevention and suppression in coal mines. Cationic polyacrylamide (CPAM), anionic polyacrylamide (HPAM), and carboxymethylcellulose (CMC) were each separately incorporated into a sodium silicate gel (abbreviated therein with WG) to obtain three gels, named CPAM/WG, HPAM/WG, and CMC/WG. Aluminium citrate was used as a crosslinking agent and then added to the gels to obtain two novel interpenetrating network hydrogels. It was found that among the different gels, the HPAM-Al³⁺/WG hydrogel had the best seepage capacity, water retention capacity, compressive strength and inhibition properties.

In Liu et al. (2013), a hydrogel is formed with an interpenetrating network of sodium silicate, hydrolysed polyacrylamide (HPAM), and an activator at 50 °C - 70 °C for 5 - 140 hours. The activator serves as a source of protons that allow the sodium silicate to form a silicate hydrogel. The silicate hydrogel is weakly bound to the HPAM molecules by hydrostatic forces. These hydrostatic forces between the silicate hydrogel and HPAM tend to wrap around HPAM and also form two or more polymer chains together in a weak crosslink. The reaction to form the gel occurs when the sodium silicate and activator (two components) or the sodium silicate, HPAM and activator (three components) are contacted. The variant with three components has a higher elasticity than the variant with two components without polymer.

The gels produced by the last two documents presented contain water glass. Still, they are also not suitable for further treatment, for example, in manufacturing apparatuses for a three-dimensional structure, because the rheological properties of the gels produced are not suitable for this purpose.

In Ordoñez et al. (2019), a ceramic paste is presented that was printed using a 3D printing technique, the direct ink writing (DIW) process. The ceramic paste was produced in several variants with different volumetric proportions of solids with respect to water, ranging from 50% to 56%. Furthermore, two additives, namely sodium silicate and sodium polyacrylate, were used in concentrations between 0.2% and 0.8% by weight (wt%). The latter additives were used as deflocculants, which means that water glass is not directly printed. The samples were prepared by slowly adding powders to a liquid solution to properly impregnate the solids to obtain a ceramic paste that could flow through the die and be extruded. On the other hand, if the solids content was too low, a low viscosity paste was formed that was too liquid to obtain a uniformly printed and stable shape. All printed samples had very low resolution and lacked surface quality.

With the methods known in the prior art, it is not possible to produce a gel in a cost-effective, process-efficient manner that is suitable for mass production. Furthermore, with the methods known in the prior art, it is not possible to design the rheological properties of the gel in a way that allows further processing or production for specific products.

### Objective of the invention

The objective of the invention was to eliminate the disadvantages of the prior art. In particular, a raw material, especially a gel, should be provided that has suitable rheological properties for further processing. Furthermore, the process should be cost-effective, suitable for mass production and process-efficient, especially to produce porous structures or hierarchical porous structures. In particular, pure inorganic (without organic additives) injectable/extrudable (semifinished) materials which open up a wide spectrum of shaping technologies should be provided.

### Summary of the invention

The objective according to the invention is solved by the features of the independent claims. Advantageous embodiments of the invention are described in the dependent claims.

In a preferred embodiment, the invention refers to a method for producing a porous or non-porous three-dimensional structure comprising the following steps:
a) Contacting a silicate and water to form a silicate-water solution,
b) contacting the silicate-water solution with a first alcohol to form a gel, wherein the gel is a feedstock for an additive manufacturing apparatus and/or an extrusion-based process,
c) ejecting the gel layer by layer using the additive manufacturing apparatus and/or the extrusion-based process to form a three-dimensional build part with or without pores,
d) heating and/or drying the build part.

The process according to the invention has thus proved to be very advantageous in many aspects, which will be discussed in more detail below.

Particularly advantageous is the effect that by carrying out the process according to the invention, in particular steps a) and b), in step c), a shear-thinning (also called structural viscous) gel can be obtained. Above all, the shear-thinning gel can be obtained without the use of organic additives.

In contrast, it was common in the prior art to use organic additives and/or organic polymers, such as dispersants and/or binders, to provide gels. However, significant disadvantages are associated with the use of organic compounds in the preparation of a gel. Typically, this increases the number of process steps, resulting in lower process efficiency. In addition, organic additives such as organic polymers are expensive. In particular, this does not lead to the processes being useful for mass production. Furthermore, it has been found in the prior art that organic additives leave small moieties and/or reagents in the gel, which in most cases are toxic and remain in the gel. Organic additives that are toxic are usually removed in an additional process step, which provides another disadvantage in terms of efficiency if they are used. Another issue is that when organic additives are used, the gel or the build part can crack after drying and/or heat treatment, which is disadvantageous in terms of stability, durability and/or quality.

Advantageously, the process according to the invention eliminates the disadvantages associated with organic additives by first contacting a silicate with water in step a) and forming a silicate-water solution and thereupon contacting the silicate-water solution with a first alcohol in step b), thereby forming the gel. Notably, no organic additives are needed to form the gel. The gel forms merely by contacting the silicate-water solution with the first alcohol.

The silicate can be described as a colloidal solution stabilized by silicate ions. In particular, it may contain a plurality of silicates with different degrees of condensation that coexist in equilibrium. The addition of the first alcohol breaks the equilibrium and induces the gelation, i.e., the formation of the gel, can take place. Gelation occurs because of the hydroxyl group of the first alcohol. In particular, the oxygen atom of the hydroxyl group tends to react with the hydrogen of the hydroxyl group of the water. The water molecules had attached to the silicates before contacting with the first alcohol, which is also called hydration. In particular, a hydration shell is formed as a result of the hydration. Hydration occurs due to the electrostatic forces between the charged silicate ions and the water dipoles (ion-dipole interaction). With the formation of hydrogen bonds to the first hydrate shell, further water molecules can attach and thus form another hydrate sphere. The addition of the first alcohol breaks the hydration shell and/or hydrate sphere, leading to immediate polycondensation between the colloidal species, allowing gelation to occur. Therefore, the degree of gelation, which determines the strength of the resulting gel, can be determined by the amount of the first alcohol, or exactly the ratio between silicate-water solution and the first alcohol. In particular, the rheological properties, especially the shear thinning behaviour, can be controlled by the ratio of the silicate-water solution.

The degree of condensation especially includes the ability to carry out a reaction in which two molecules combine with the elimination of water. The degree of gelation preferably describes the extent of crosslinking reaction and the ability, at what rate and/or how the properties of the gel formed are designed.

It is a surprising and unexpected finding that a gel with excellent rheological properties can be produced that does not require organic additives and results merely from contacting the silicate-water solution with the first alcohol.

The silicate can be used both in a solid phase, for example, in powder form, and in a liquid phase, in particular, dissolved in a solvent. Furthermore, pellets comprising sodium hydroxide NaOH and/or distilled water can be used in step a) to adapt the silicate.

In particular, the gel produced in step b) is a raw material for an additive manufacturing apparatus and/or an extrusion-based process in process step c). Specifically, for step c), it was necessary for the gel to meet specific rheological requirements essential to be used, for example, in an additive manufacturing apparatus and/or an extrusion-based process. In the context of the invention, the expressions additive manufacturing device and additive manufacturing apparatus may be used synonymously.

The rheological properties here refer in particular to the shear thinning behaviour. Shear-thinning behaviour is the property of a fluid to exhibit decreasing viscosity under high shear forces. That is, the greater the shear acting on the fluid, the less viscous it becomes. The shear-thinning behaviour of the obtained gel is a very significant advantage, especially for the fabrication of porous three-dimensional structures, specifically using the additive manufacturing device and/or the extrusion-based process.

In the production of the build part, at least before further treatment by, for example, heat treatment and/or drying, the shear-thinning behaviour means that sections of the build part do not drip when the gel is applied, since the shear is small and thus the viscosity is large. In contrast, the extrusion itself, for example, when exiting a nozzle of the additive manufacturing device, is particularly easy to accomplish due to the movement of the nozzle and/or a deposit of the gel on a built platform since the shear is large and thus the viscosity is small. In particular, this means that no residues remain on the nozzle, for example, due to adhesion and/or bonding, so that production from the build part is particularly process-efficient and simple. Advantageously, the shear-thinning gel exhibits particularly good flow behavior so that particularly filigree porous three-dimensional structures can also be produced.

Advantageously, the build part in step c) can be provided directly after ejection from the additive manufacturing device and/or the extrusion-based process, in particular also at ambient pressure and/or at room temperature. Advantageously, this is particularly process efficient, as additional measures do not need to be taken to achieve stability of the build part. Ejecting the gel layer by layer through the additive manufacturing device and/or extrusion-based process can be done on a built platform in particular. It may also be preferred to apply it directly in a container, such as a bath, in which the second alcohol is present or drip the second alcohol during the ejecting layer process.

In a further preferred embodiment, the method according to the invention is characterized in that a second alcohol is introduced into the pores of the build part. In the sense of the invention, this can also be understood as contacting the second alcohol with the build part.

Contacting the second alcohol with the build part serves in particular to solidify the structure. In particular, contacting the build part with the second alcohol allows the water and/or the first alcohol to diffuse out of the build part. The build part is from the gel, which has been preferably formed at alkaline pH (a pH of over 7), whereby the colloidal silica particles or silicate spices are stabilized by their charge. The alcohols have a lower dielectric constant and offer a high number of labile hydroxyl groups. The contacting of the second alcohol further compresses the double layer, thus increasing the polymerization reaction, which would strengthen the network and enhance gel formation. In this context, it was surprising and not expected that the contacting with the second alcohol could speed up a specific solidification of the build part, in particular, of the porous built part that has a larger surface-volume ratio. Only after contacting with the second alcohol the build part has increased his stiffness relatively fast and was able to support itself and, in particular, did not exhibit any undesirable deformations. It allows high processing rates/velocities for layer-wise shaping technologies.

In step d), the build part is subjected to heating and/or drying. Through step d), remaining residues of, for example, water and/or the first alcohol can be removed. Furthermore, foaming is performed by step d) so that a desired porous, preferably a desired hierarchical porous, three-dimensional structure can be produced. Drying comprises steps in which temperatures are used that occur below approx. 60°C (Celsius). Heating comprises steps in which temperatures of up to about 500°C are employed. In particular, drying can be a preliminary step for heating, for example, to remove residual components of the remaining first alcohol and/or water and/or to obtain a desired water content in the built part for the foaming process. In particular, drying also includes storage under ambient conditions, thus including storage in air. In particular, drying may prevent the cracking of the three-dimensional structure. Drying is advantageous in that higher mechanical and/or chemical stability is achieved.

The inventors were confronted with various problems in developing the preferred process and had to solve them with a high degree of inventive thinking. The combination of the present process steps leads to a surprising synergistic effect, which results in the advantageous properties and the associated overall success of the invention, with the individual features interacting with each other. An important advantage of the process according to the invention is the extremely fast, reproducible and economical synthesis procedure.

The process according to the invention represents a major advance in the field of fabrication of three-dimensional structures since advantageous effects could be achieved with the technical features. The gel, which is formed by contacting the silicate-water solution with the first alcohol, is used as a raw material for the additive manufacturing device and/or the extrusion-based process, without using or requiring organic additives. This represents a simplification and, in particular, a higher effectiveness of the process, since otherwise these would have to be additionally added and, in particular, also removed again in an additional, usually time-consuming, process step. In particular, time can be saved, which makes the process according to the invention feasible for industrial applications and applications aimed at mass production.

Not every raw material, and in particular, not every gel, is suitable as a raw material for producing components that exhibit high quality using additive manufacturing devices and/or extrusion-based processes. For example, in Ordoñez et al. (2019), ceramic pastes were provided that could only achieve an unfavorable quality of the manufactured objects.

Surprisingly, the gel produced exhibits shear-thinning behaviour, which is particularly advantageous, especially for the use of the additive manufacturing device and/or the extrusion-based process. Due to the shear-thinning behaviour, the build part itself exhibits high durability while at the same time preventing unfavorable dripping, for example, from the nozzle. This results in an improvement and quality enhancement of the manufactured porous three-dimensional structure.

In the sense of the invention, a porous three-dimensional structure refers to a three-dimensional structure which has porosity on different dimensions. Therefore it is more spaced out and can allow absorption and/or air or fluid flow. From the perspective of material science or engineering, a porous material is one that has less than about 98% of the theoretical density (= the density that it would have without any pores). The porosity represents the ratio of pore volume to the total volume of the three-dimensional structure and describes the amount of actual pores present. The total porosity of the three-dimensional structure is composed of the sum of the pores that are connected to each other (interconnected or open porosity) and the pores that are not connected to each other (closed or isolated porosity). Open porosity is defined as continuous pores involving connecting the interior of the specimen with the surrounding gas or liquid phase. Closed porosity contains pores that are completely isolated from the external surface, not allowing access to external liquids or gaseous phases. The open porosity is relevant for many functional materials, where a fluid or gas needs to enter the porous medium to fulfil its functionality, such as scaffolds for bone repair, heterogeneous catalyst and filter media; or conversely where closed pores are required, as in insulation and barrier media.

In general, all materials have small holes about the size of an atom. It is impossible to remove them, and such small holes are not called "pores". It is very difficult to manufacture a material without defects, and pores are one type of material defect. In some application scenarios, such pores are desired property in the sense of the application. In particular, the term porous thus refers to the three-dimensional structures containing such material defects, i.e. pores.

In the sense of the invention, a non-porous three-dimensional structure refers to a structure that does not have pores larger than the volume of a few atoms, for example 1, 2, 3, 4, 5, 7, 8, 9, 10, 15 or 20 atoms.

Typically, the classification of porous materials is based on the size of the pores: Microporous structures have pores smaller than 2 nm (nanometres), mesoporous structures have a pore size between 2 nm and 50 nm and macroporous structures have pores larger than 50 nm.

The process according to the invention provides the possibility to fabricate non-porous and porous materials by adjusting the deposit pattern which is realized by the movement of the nozzle in the additive manufacturing apparatus and/or the extrusion-based process. For example, the strand spacing can be adjusted. By printing without strand spacing for each layer, the strands can be deposited close to each other, resulting in a non-porous material. By applying strand spacing within single layers, gaps can be created between the single strands. These gaps result in pores in the three-dimensional structure after layers have been stacked. In a preferred embodiment, the lattices are stacked layer by layer, and their volume fraction can be adjusted by altering the planar filling fraction within each layer. Larger spacing between adjacent strands within a layer results in increased pore size and lower volume fraction. The achievable spectrum of pore size may spread from micrometres to millimetres.

Silicates refer to anions containing silicon and oxygen built molecules or structures, and also the salts and esters based on ortho-silicic acid (Si(OH)₄) and their condensates. The basic building blocks of all silicates are SiO₄ tetrahedra. One silicon atom is surrounded by four oxygen atoms. In particular, alkali silicates are soluble in water or other solvents. The chemistry of silicate solution is quite complex. Different types of silicate or polysilicate anions are present in the aqueous solution.

A gel is a dispersion comprising a liquid and a solid phase. The solid phase forms a net-like mesh in which the liquid phase resides. Gels are viscous, elastic, semi-solid substances. The transformation of a liquid substance into gel is called gelation.

In the sense of the invention, the build part refers to the intermediate product provided by the additive manufacturing machine and/or the extrusion-based process.

Furthermore, in a preferred embodiment, the porous three-dimensional structure can exhibit hierarchical porosity by using the preferred method according to the invention. Hierarchically structured solids contain structural elements which themselves have structure. The hierarchical order of the material body can be defined as the number of levels with recognized structure. In the sense of the invention, hierarchical porosity is characterized by multiple levels or length scales of porosity and /or the pore regularity at each level. In preferred embodiments, the built part after heating and/or drying presents hierarchical porosities with one level of hierarchy given by the designed deposit pattern and an additional level of hierarchy produced through foaming during heating and/or drying.

The inventors have achieved surprising results in the design of the preferred method through a rational combination of material properties and possible processing steps. An additional advantage of the method according to the invention is to achieve a hierarchical porous structure. The process according to the invention provides a synthesis strategy of hierarchical porous structures that are tailored for specific applications, such as catalysis, energy storage, usage and conversion, removal of pollutants, sensors, biomaterials, smart soaps, and structuring of consumer products.

In a further preferred embodiment, the method according to the invention is characterized in that the silicate is selected from a group comprising alkali silicates described by a formula M₂O·nSiO₂, wherein M is selected from a group comprising alkali metals lithium (Li), sodium (Na), potassium (K),wherein n denotes an amount of substance between M₂O and SiO₂, wherein the silicate is preferably selected from a group comprising water glass, wherein in the case of water glass M is selected from a group comprising sodium (Na), lithium (Li) and/or potassium (K). In further preferred embodiments, the silicate is selected from rubidium (Rb), caesium (Cs) and/or francium (Fr).

Advantageously, alkali silicates are readily available at a lower cost. This is particularly advantageous for the fact that mass production of porous three-dimensional structures can be provided particularly effectively by the process according to the invention. Thus, advantageously, a particularly high economic success can be achieved.

Alkali silicates designate silicates of the alkali metals. Since silicates can be described by the formula M₂O·nSiO₂, the variable M is an alkali metal. The variable n indicates the molar ratio, i.e. the ratio between the amounts of substances of SiO₂ and M₂O. Alkali metals are the elements from the 1st main group of the periodic table without hydrogen, whereas these have been listed above. Since they have only one valence electron, they are very reactive.

Water glass has proved to be particularly advantageous as a starting material for the silicate solution. Water glass comprises the compounds M₂O·nSiO₂, where M is selected from a group comprising sodium (Na), lithium (Li) and/or potassium (K). Water glass is a particularly low-cost starting material, which advantageously significantly enhances the performance aimed at mass production. Furthermore, water glass is environmentally friendly and thus also particularly climate- and resource-friendly. Since modern technology is currently and globally striving to find out which production engineering processes can be used, a significant further development has been achieved by the process according to the invention. As a starting material, water glass is environmentally friendly and particularly inexpensive, which advantageously greatly enhances the high process efficiency.

In addition, from the consideration of gel formation, water glass has proven to be particularly advantageous as a starting material compared to organic compounds. This is because water glass has excellent water solubility. The choice of organic compounds is usually quite limited since they must possess sufficient water solubility to be present in the necessary quantities to cause gelation.

It was surprising that by using water glass, in particular by using water glass, water and the first alcohol, it was possible to provide an inexpensive gel, which has excellent rheological properties for an additive manufacturing device and/or an extrusion-based process. In particular, the use of organic additives could be omitted, whereby advantageously the additional process steps could be avoided while the porous structure showed excellent quality.

In this context, the gel, which resulted, in particular, from water glass, exhibits particularly good processing and application performance for producing porous three-dimensional structures that are stable, robust and rich in detail. During injection, which is applied layer by layer, in particular, the extruded material has an excellent curing profile and reliable curing kinetics, i.e., with regard to the speed and course of curing of the material, the selection of water glass proved to be particularly advantageous. In particular, through the use of water glass, the build part exhibited advantageous processability and, more specifically, reliable storage stability. In addition, the adhesion and peel behaviour during extrusion and/or printing from the additive manufacturing device and/or the extrusion-based process was particularly advantageous, as problems such as severe distortions, material detachments, incorrect alignments, dents, thread formations, too high or too low material supply of the build part could be advantageously eliminated.

In a further preferred embodiment, the method according to the invention is characterized in that
- the silicate-water solution contains a proportion of the silicate in the range between 9 % and 45%, preferably between 22.5% - 45 % based on the mass of the silicate-water solution and/or
- the silicate has a ratio of silicon dioxide SiO₂ to an alkali metal oxide between 1.6 and 2.8, preferably between 2.4 - 2.8.

It was surprising and unexpected that by the given parameter ranges regarding the proportion of silicate in the silicate-water solution and/or the ratio between alkali metal oxide and silica SiO₂ the silicate-water solution itself and the gel can be provided with a particularly advantageous consistency.

In particular, the advantageous properties with respect to the consistency of the silicate-water solution itself concern the processability and the rheological properties. With the advantageous processability, the silicate-water solution can be stored with great stability for further processing. The advantageous rheological property is relevant for further mixing used materials of the method according to the invention, as the silicate-water solution is easy to mix with other substances, whether solids or liquids, to obtain a homogenous mixture, which is also relevant for the processability.

In particular, the advantageous properties with respect to the consistency of the gel concern the processability, the structural compactness, the strength and, above all, the rheological properties of the gel.

With the advantageous processability, the gel can, for example, be subjected to further processing steps without losing quality. The advantageous structural compactness is particularly relevant for further use in the additive manufacturing device and/or the extrusion-based process, as the gel can, but does not have to, pass through different sections therein, such as a nozzle and/or different areas with different temperatures, which is also relevant for the processability. The strength describes the mechanical resistance with which the gel opposes itself, especially in the case of plastic deformation, which is also relevant to be usable, for example, for different nozzles for a variety of devices, especially of the additive manufacturing apparatus and/or extrusion-based processes.

In particular, the preferred proportions of approx. 22.5% - 45% proved to be particularly advantageous in that the gel could be produced especially quickly, and the outcome of the gel could be satisfied. This was not to be expected but had a particularly beneficial effect on the process efficiency of the overall procedure.

Any form of silicate, in particular also water glass, can be used, for example as a liquid, as a powder and/or as granulates. The embodiments with powder and/or granulates may be first dissolved in the defined amount of water, in particular distilled water, for a homogenous solution.

The parameter ranges were found out through a high degree of intensive research. The determination required some time, inventive thinking and many experiments.

In a further preferred embodiment, the method is characterized in that fillers are added, wherein the fillers are in an amount of approx. 1 vol.% to 60 vol.% in the silicate-water solution, wherein preferably the fillers comprise a material comprising ceramics, glasses, metals, carbon, wherein particularly preferred the fillers are in a shape of granulates, fibres and/or cubes.

Advantageously, additional properties and effects of the three-dimensional porous structure can be achieved, adjusted and/or regulated by the use of additional fillers. In particular, the fillers can be soluble or insoluble, which are added in high content in step a) or step b). The fillers can advantageously change the mechanical, electrical, optical and/or processing properties of materials.

The particle size, particle shape, particle structure, particle size distribution, specific surface area size and surface activity of a filler are crucial factors for the properties of the gel and thus also of the porous three-dimensional structure. By changing the type and/or the aforementioned properties of the fillers, different technical effects can be achieved.

Fillers comprising ceramics, glass, metal and carbon have proven to be particularly advantageous, as presented in the following.

Ceramics can be used to regulate various properties of the gel and, in particular, of the porous three-dimensional structure. For example, influence can be exerted on the surface, for example, with regard to inert against other substances, in order to produce a particularly durable and resistant product. Likewise, influence on the bioactivity of the porous three-dimensional structure can be advantageously exerted, in particular by ceramics such as calcium phosphate and/or hydroxyapatite. The ceramic can be selected from a group comprising aluminium oxide, magnesium oxide, zirconium oxide, titanium dioxide, aluminium titanate, dispersion ceramic (Al₂O₃/ZrO₂), lead zirconate titanate, barium titanate, silicon carbide, silicon nitride, aluminium nitride, boron carbide and/or boron nitride. Advantageously, by using a ceramic, a great hardness, a high mechanical strength, an extension of the service temperature of the finished porous structure, service temperature, a dimensional stability, a corrosion resistance as a result of resistance to chemical influences of all kinds, a weather resistance, a wear resistance, a high electrical insulating capacity, dielectric and ferroelectric properties, low density, a low or high thermal conductivity and/or good tribological properties can be achieved.

For the purposes of the invention, ceramic refers to a material that is predominantly non-metallic and inorganic and possesses certain useful properties.

By using metals and/or carbon, electrical conductivity can advantageously be achieved, which may also be relevant to the porous three-dimensional structure in some applications, such as porous electrodes. Carbon is characterized in comparison by the fact that it occurs in a variety of modifications and microstructures. In addition to the two crystalline modifications, diamond and graphite, carbons with less ordered structures can also be used as fillers. In particular, porous materials include carbon, are lightweight, electrically conductive, mechanically resilient, high temperature resistant and corrosion resistant. These properties can thus be transferred to the porous three-dimensional structure and applied advantageously.

By using glass as a filler, for example, glass fibres, glass beads and/or broken glass, specific optical properties can be achieved. For example, the use as a light guide is possible and/or the refraction of light with the aid of glass can produce desired diffuse, transparent and/or translucent images. The use of glass can thus enable applications in data transmission, illumination and imaging and metrology. For example, the glass can be selected from a group comprising construction glass, expanded glass, foturan iris glass, metallic glass, optical glass and/or foam glass.

The preferred design of the shape of the fillers comprising granulates, fibres and/or cubes can preferably influence the surface of the gel and thus also the surface quality of the gel and thus of the porous three-dimensional structure. Further, for example, a desired electrical conductivity can be achieved by a sufficient content, distribution and shape of the metal particles.

The corresponding ratios of the silicate, the silicate-water solution and/or the first alcohol can be adjusted accordingly when using fillers. For example, the proportion of silicate can be reduced because the fillers require a certain amount of material, a mass and/or a volume, in particular, if a certain property, such as electrical conductivity, has to be set specifically and/or increased.

A fibre refers to a linear, elemental structure comprising a fibrous material and having an outer fibre shape. The longitudinal shape may be plain or curly, while the cross-sectional shape may be round or angular. The fibre may be continuous or limited in length. In particular, the fibre is a thin, flexible structure relative to its length.

A granulate comprises many small, solid particles such as grains or spheres. Thus, a granulate may comprise granular materials, such as plastic granulates, powder, and/or also loose material.

In a further preferred embodiment, the method according to the invention is characterized in that the water and the silicate are brought into contact with each other during a temperature range between approx. 5°C - 70°C, preferably between approx. 10°C - 30°C.

Advantageously, the silicate-water solution could be formed particularly quickly by using this specified temperature range. The preferred temperature ranges between approx. 10°C and 30°C has proved to be particularly advantageous in that it includes in particular the room temperature, and no additional measures need to be taken to provide the silicate-water solution. This advantageously simplifies the process of the invention in its entirety. In particular, the preferred temperature range makes it possible to dispense with costly systems that manage heat supply. Above all, process step a) can be carried out particularly easily, quickly, effectively and reliably with the specified temperature range between approx. 10°C and 70°C, in particular between approx. 10°C and 30°C. This circumstance is particularly advantageous for economically efficient production, as a large amount of silicate-water solutions can be provided simultaneously in one room.

In a further preferred embodiment, the method according to the invention is the first alcohol is contacted with the silicate-water-solution, wherein the first alcohol has a proportion within a range between approx. 20% - 50% with respect to the mass of a mixture comprising the silicate-water-solution and the first alcohol.

The specified mass fraction of the first alcohol contacted with silicate-water solution proved to be particularly advantageous in that the gel could be produced especially quickly. The rapid production of the gel was surprising and unexpected. Advantageously, the gel forms after only a few seconds, for example, in less than 10 seconds, less than 5 seconds or even less than 3 seconds. In this regard, the gel forms without additional organic additives. In particular, the gel exhibits shear thinning behaviour, which is particularly advantageous, especially for use in additive manufacturing devices and/or extrusion-based processes. Advantageously, the production of the gel is induced only by the addition of the first alcohol.

The specified mass fraction of the first alcohol for contacting with the silicate-water solution is also advantageous from the aspect that sufficient water can already be removed from the solution in this range and the sufficient gel strength for further processing.

If the proportion of the first alcohol for contacting with the silicate-water solution were too low, only a small amount of water would be ejected from the silicate-water solution. The consequence would be that the gel, especially during extrusion in step c), containing too much water could no longer support itself, i.e., would be unstable. This could further lead to volume shrinkage of the build part, especially during drying and/or heat treatment.

Conversely, if the proportion of the first alcohol to contact the silicate-water solution were too high, the additive manufacturing apparatus and/or extrusion-based process would require too high a force and/or pressure to print and/or extrude the gel. As a result, a nozzle with a comparatively large orifice would be needed to provide sufficient material for the build part. However, with a large nozzle, in particular, with a large orifice of a nozzle, it is not possible, or only possible to a limited extent, to produce structures with a filigree and/or particularly detailed nature.

Advantageously, the described disadvantages are eliminated in that the proportion of the first alcohol for contacting with the silicate-water solution is between approx. 20% - 50% with respect to the mass of the mixture comprising the silicate-water solution and the first alcohol.

In a further preferred embodiment, the method according to the invention is characterized in that the first alcohol in method step b) is selected from a group comprising ethanol, ethylene glycol (EG), triethylene glycol (TEG) and/or polyethylene glycol (PEG). In a further preferred embodiment, the first alcohol is selected from Carboxylic acid ester (acetates) and/or ketones.

The specified alcohols as the first alcohol have proven to be particularly advantageous in that gelation can be brought about especially reliably, quickly and process-efficiently. When the silicate is contacted with the water to form the silicate-water solution, hydration first occurs. In this process, water molecules attach themselves to the silicate ions, resulting in the formation of so-called hydrates. Each silicate ion then forms a so-called hydrate shell. Further layers comprising water molecules can be attached to this first layer, the hydrate shell, so that a so-called hydrate sphere is formed. Contact with the first alcohol, in particular by the hydroxyl group of the first alcohol, breaks the hydrate sphere and/or the hydrate shell. Thus, water is ejected, and gelation can take place. In this process, the initially isolated building blocks, the silicate ions, crosslink to form a viscoelastic network, the gel.

In particular, the gel can be a hydrogel, i.e., a gel comprising a water-insoluble 3D (three-dimensional) network composed of a hydrophilic skeleton that can bind water. Hydrogels are very advantageous because they are biocompatible, which means friendly to encapsulated bioactive molecules and have a similar structure as the extracellular matrix, thus exhibiting tissue-like properties, particularly in mechanical terms. In addition, hydrogel is easy to adjust physical and chemical properties and possible injectability, which is a benefit for the additive manufacturing machine and/or the extrusion-based process.

Acetates, in particular also carboxylic acid esters, can also be used instead of the first alcohol or in combination with the first alcohol. Silicate-water solution provides a basic aqueous medium environment. By basic hydrolysis of the esters gives an alcohol, the hydrate shell and/or hydrate sphere of the silicates can be broken, and gelation can take place favorably, in the case of the use of acetate.

Carboxylic acid esters formally comprise a carboxylic acid, an alcohol and/or a phenol. They also have the ability, through the structure of their composition, that gelation can take place particularly quickly and reliably.

In a further preferred embodiment, the method according to the invention is characterized in that after contacting the silicate-water solution with the first alcohol, shaking and/or stirring of a container takes place, wherein the mixture comprising the silicate-water solution and the first alcohol is inside the container.

Mixing and/or stirring have been found to be particularly simple, reliable, fast and process effective options to provide the gel. In particular, the mixing and/or the stirring can be performed by one person, which further enhances and favours the simplicity of the process.

By mixing in the container, the silicate-water solution and the first alcohol can combine to form a mixture. In particular, a high homogeneity of the mixture can be achieved by mixing. It serves to unit at least two starting materials, which have different properties, into a new material. The aim is to achieve the highest possible homogeneity of the new substance. Mixing can be carried out, for example, by hand in front of a person carrying out the process according to the invention. Likewise, it is possible to use devices known in the prior art for mixing, such as twin-shaft batch mixers, drum mixers, pan mixers, paddle mixers, screw belt mixers, free-fall mixers, axial mixers, radial mixers, compulsory mixers, feed mixers and/or ointment mixers. The latter mixers have proven to be particularly reliable in the prior art, especially for obtaining particularly large quantities of gels.

Analogously, stirring can also be performed by a person or by a device. Stirring is also a substance combining process. Stirring serves to evenly distribute the silicate-water solution with the first alcohol, especially when fillers are used. Stirring and mixing are related. Stirring may also advantageously serve to improve heat transfer and other objectives. In the prior art, useful stirrers can be used such as magnetic stirrers, propeller stirrers, stirrers with replaceable stirring blades, turbine stirrers, jet mixers, centrifugal stirrers, anchor stirrers, half-moon stirrers, fan stirrers, dissolver stirring coils, visco jets, and/or ruvastar.

In a further preferred embodiment, the method according to the invention is characterized in that the gel is collected in a centrifuge, wherein the centrifuge performs a centrifugation with a speed of up to 2000 rpm (round per minute), preferably between 500 - 1200 rpm.

Advantageously, centrifugation can accelerate the separation from the gel and residual portions of water. In particular, the gel can be deposited and easily reused. Centrifugation is performed with the aid of a centrifuge.

Centrifuges use the mass inertia in the centrifuge chamber to separate substances. Particles or media with higher density migrate to the outside due to the higher inertia. In doing so, they displace the constituents with lower density, which thus reach the centre. Compared to sedimentation, the process is much faster due to gravity or becomes possible in the first place. Counterforces such as adhesion, thermal molecular motion or viscosity are overcome during centrifugation. The duration and/or the centrifugation speed can also advantageously influence further process steps.

By storing the gel prior to transfer to the additive manufacturing device and/or the extrusion-based process, the gel can be given or favoured the desired consistency and rheological properties. The flow behaviour and especially the shear thinning behaviour is of utmost importance and particularly advantageous especially for additive manufacturing device and/or the extrusion-based process at the same time, since a different viscosity behaviour can lead to adverse effects such as warping, bulging, delamination, cracking, displacement, undesired alignment, missing layers, threading, too slow material delivery, too fast material delivery and/or pores during the fabrication of the porous structures.

It was surprising to find that the gel can only be stored at a temperature of up to approx. 50°C. The temperature should not be set higher than this; otherwise, too much solidification would be achieved due to excessive water evaporation. Too much solidification of the gel would cause difficulties in the production of the build part by the additive manufacturing device and/or the extrusion-based process, as too high a pressure would be required for the extrusion, for which larger nozzles would have to be used and the detail of the three-dimensional porous structure would suffer.

A temperature of up to approx. 50°C, in particular with a storage time of up to approx. 24 hours, gives the gel advantageous flow behaviour, especially in terms of shear-thinning behaviour. The temperature during storage, i.e., before the gel is used in step c), may also be referred to as the storage temperature in the context of the invention. The corresponding time can also be titled storage time. Too high a storage time should also be avoided, as again the problem of solidification could arise. For example, the storage time can also be 2 hours, 10 hours or 15 hours. The higher the set temperature is, the lower the storage time can be and vice versa is also true. The lower the set temperature is, the longer the storage time can last. It was unexpected that, especially due to the combination of storage temperature and storage time, the gel exhibited excellent rheological properties that are particularly effective for additive manufacturing devices and/or extrusion-based processes.

In a further preferred embodiment, the method according to the invention is characterized in that the additive manufacturing apparatus applies the gel onto the build platform via an extrusion-based manufacturing and/or an extrusion-based additive manufacturing process, wherein preferably a temperature of the gel in the apparatus is at or about room temperature and/or a temperature of a build platform is up to approx. 60°C.

Additive manufacturing devices perform additive printing processes. A synonymous term for the additive manufacturing device is the 3D printer (synonym for the additive manufacturing apparatus). In additive manufacturing apparatuses, the objects to be manufactured are produced based on a computer program. In this process, technical drawings of the component to be made are generated in special CAD programs and/ or scans from the imaging process then saved in the file format necessary for the 3D printer. These are sent to a 3D printer, which then performs the printing using the layered construction process. Additive manufacturing processes thus represent the opposite of conventional machining, in which objects are machined out of a block of material by removal. Furthermore, additive manufacturing offers great flexibility to design the shape restriction of conventional manufacturing technologies, and the integrated production process without the mould shortens the manufacturing cycle and new product development time; meanwhile, intensively reduces the production cost; therefore, it has especially gained the interest of industries.

As a special additive manufacturing process, so-called direct ink writing (abbreviated DIW) is particularly advantageous in the context of the invention because it offers great material flexibility. Here, DIW describes processes that use a computer-controlled movable pattern-generating device to produce the structure, architecture, and texture of the object. The movable pattern-generating accessory is usually a nozzle. Thus, the gel provided by process steps a) and b) of the method according to the invention can be understood as ink and/or deposit filament of the additive manufacturing device. The DIW includes processes on the group comprising filament-based processes such as robocasting, micropen writing, and fused deposition, and droplet-based processes such as ink-jet printing and hot-melt printing.

The use of robocasting to produce the three-dimensional porous structure has been found to be particularly advantageous in the context of the invention. In robocasting, the object is built up by printing the desired shape layer by layer. The material provided by the gel produced in the process steps a) and b) is then extruded through a small nozzle, the position of which is controlled to carve out the shape of each layer of a CAD model (CAD is short for computer-aided design). The CAD model is specified beforehand by a user. The gel leaves the nozzle in a flow state but immediately retains its shape, taking advantage of the rheological property of shear-thinning behaviour. Robocasting thus differs from the prior art fused deposition modelling process in that it relies on the molten material flow obtained by heating the feedstock.

Advantageously, robocasting can be used to build geometrically complex ceramic structures. Furthermore, a very large number of materials can be printed by robocasting. In addition, robocasting is advantageously particularly process-efficient, as it is a very simple and extremely cost-effective process.

Another particularly advantageous feature is the fact that the use of gel in robocasting allows the three-dimensional porous structure to be designed hierarchically. Hierarchical structures refer in particular to a structure, for example, a material or a surface, which has several structures, but at least two structures. For example, a structure of a smaller dimension (e.g., in the nanometre range) may be located within a structure having a larger dimension (e.g., in the micrometre range). For example, in a hierarchical structure, a fibre structure (smaller dimension) may be within a terraced structure (larger dimension). The gel itself, with a 3D network composed of a solid skeleton containing water, can offer a hierarchy as starting material. Advantageously, the production of hierarchical structures with the aid of the process according to the invention results in a combined effect of different properties of the structures and thus an additional effect that goes far beyond the effects of the individual structures.

These additional advantageous effects with respect to hierarchical structures can, for example, relate to mechanical stability, hardness and thus also robustness. This has an advantageous and, in particular, extending effect on many areas of application of the three-dimensional porous structure, for example, for bone implants. Additional advantageous effects can be associated with a particularly pronounced advantageous inertization, similar to the lotus effect. In this sense, a hydrophilic material can macroscopically behave in a hydrophobic way if its surface has necessary microstructural features. This can advantageously allow water, dirt and/or other particles that are not desired to slide off the surface. In particular, inertization can bring an advantageous self-cleaning effect.

Other extrusion-based processes can also be used in combination with the gel of the invention. An extrusion-based process describes a process in which extrusion, i.e., pushing out the gel, can be performed. The difference between an extrusion-based and an additive manufacturing process is that the device for extrusion does not necessarily have to move. In particular, the extrusion is performed continuously on a shaping orifice, which may or may not be a nozzle. The shaping orifice may also be merely an orifice, have a constant, tapering or even a widening cross-section. The opening may also be formed as a matrix or a mouthpiece.

During extrusion, the gel is continuously pressed out of a shaping opening under pressure. This results in bodies with the cross-section of the opening of theoretically any length. The gel provided by process steps a) and b) can advantageously be used not only in additive manufacturing devices, but also in devices that perform more general extrusion, also called extruders, such as in a piston extruder, screw extruder, cascade extruder, planetary roller extruder and/or ring extruder.

Preferably, the extrusion from the additive manufacturing device or extrusion-based process is performed on a component platform whose temperature is up to about 60°C. It was extremely surprising and advantageous to be able to provide objects up to this temperature range that was particularly solid, strong and insensitive to external influences. The specified temperature range of up to about 60°C also has the additional advantage that solidification and/or drying already take place during extrusion, so that the process according to the invention can be carried out more quickly.

Preferably, the gel within the additive manufacturing device or within the device performing the extrusion has substantially room temperature. This has an advantageous effect on the efficiency of the process according to the invention since a user does not have to take additional, technically complex measures to transfer the gel to a certain temperature, for example a very high temperature and/or maintain the temperature to avoid a temperature gradient. Instead, the extrusion can be performed directly without complex steps or means to produce the porous three-dimensional structure.

In particular, the additive manufacturing device and/or extrusion-based process provides the build part, which has openings. Specifically, the presence of openings can provide a grid structure of the build part. The openings form pores of the build part. In particular, the openings of the build part advantageously allow the second alcohol to contact the surface substantially integrally.

In a further preferred embodiment, the method according to the invention is characterized in that the second alcohol is introduced into the pores of the build part by dropping, spraying, soaking and/or with a bath, wherein the introduction of the second alcohol into the bath is parallel or afterwards ejecting the gel using the additive manufacturing and/or the extrusion-based process.

By dropping the second alcohol into the pores of the build part, the second alcohol can advantageously be contacted with the build part particularly precisely in terms of position and/or particularly accurately in terms of quantity. In addition, it does not require any elaborate machines during the dropping but can also be supplied by a user by hand. The dripping of the second alcohol denotes that individual drop falls down or also rolls down on something, for example, through a syringe.

The spraying advantageously leads to a particularly uniform contacting of the second alcohol with already very small surfaces and/or contours of the build part. It is also advantageous that spraying can bring the build part into contact with the second alcohol over a large area, in particular also very advantageously over the entire area. In particular, angular geometries can also be advantageously wetted by the second alcohol. Spraying preferably means the application of many, small, finely distributed droplets of the second alcohol in atomized form to the build part, for example, achievable by a spraying device.

When the build part is immersed in a container in which the second alcohol is present, uniform contact with the second alcohol can be achieved over a large area, in particular over the entire area. In the process, a thin film of the second alcohol remains on the surface of the build part when it is resurfaced. Parameters such as temperature, ambient pressure, humidity and the speed and angle of immersion are factors that can regulate contact with the second alcohol. In particular, dipping means an ascending and descending of the build part into the second alcohol.

It is also possible that the build part is contacted with the second alcohol by merely placing the build part in a bath containing the second alcohol. There is an option here that the build part is built by the additive manufacturing device or extrusion-based process. Likewise, there is the option that the build part is erected directly in the bath itself. Advantageously, the direct erection of the build part in the bath comprising the second alcohol results in a simultaneous solidification of the build part with its erection. Therefore, this variant of contacting with the second alcohol is preferred, since in particular drying is no longer necessary. Thus, further process steps are shortened or even no longer required. The bath can be any device that is suitable for holding the second alcohol and at the same time has sufficient volume and/or surface area to produce the build part in it and at the same time allow large-area, in particular full-surface, contacting. In particular, steps c) and d), the erection of the build and the contacting with the second alcohol, can thus advantageously be carried out simultaneously.

A full-area contacting with the second alcohol means in particular a contacting of the substantially entire surface of the build part with the alcohol. A large-area contacting means, in particular, a contacting corresponding in part to the entire surface.

In the further embodiments, the method according to the invention is characterized in that the second alcohol is contacting the build part without pores by dropping, spraying, soaking and/or with a bath, wherein the introduction of the second alcohol into the bath is parallel or afterwards ejecting the gel using the additive manufacturing and/or the extrusion-based process. Although the contacting area is smaller than the built parts with pores in the perspective of surface-volume-ratio, the contacting with second alcohol still increase the solidification by increasing the condensation and polymerization reaction in the gel-based built parts.

Terms such as substantially, about, approx. etc. preferably describe a tolerance range of less than ± 40%, preferably less than ± 20%, more preferably less than ± 10%, even more preferably ± 40 less than ± 5%, and more preferably less than ± 1 %, and in particular comprise the exact value. Similar preferably describes quantities that are approximately equal.

In a further preferred embodiment, the method according to the invention is characterized in that the second alcohol is selected from a group comprising ethanol, methanol and/or a combination of them.

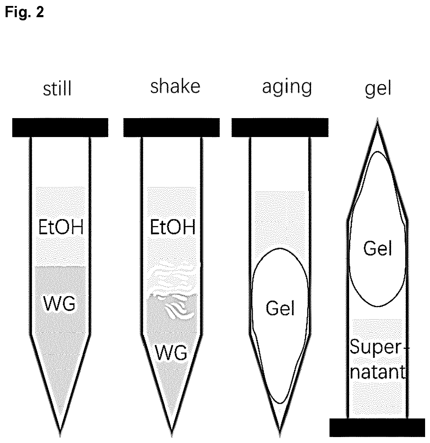

The alcohols mentioned have proven to be particularly advantageous in achieving a solidification of the build part. In particular, undesirable deformations of the build part were advantageously eliminated or prevented by the use of one or more of the alcohols mentioned (see Fig. 2). The solidification of the build part is due in particular to the fact that the alcohols mentioned lead to a repulsion of water components of the build part. This reduces the liquid content and thus also eliminates deformation. In addition to the listed alcohols as second alcohol, it is also possible to use polyethylene glycol (PEG) and/or tetraethylene glycol (TEG) instead or in combination.

In a further preferred embodiment, the method according to the invention is characterized in that for drying and/or heating the build part is transferred into an oven and/or a microwave, preferably using a temperature of up to 500°C.

Drying comprises a supply of a temperature up to about 60°C. Drying can in particular represent an intermediate step before heat treatment takes place. As a preliminary stage of heat treatment, drying is advantageous in that cracks can be advantageously avoided. If the liquid content were too high, it would be reduced by heat treatment at a high rate, which would adversely result in the formation of fractures and thus poor quality and low stability. Drying may also be the final process step in some embodiments. In particular, drying may include storage at ambient temperature. Advantageously, drying results in high mechanical and/or chemical stability.

Heat treatment is associated with significantly higher temperatures, for example, starting from about 100°C and up to about 500°C. It was surprising that advantageously up to this temperature range a specific porosity could be achieved and/or regulated. It was found that the specified temperature range determines the distribution and/or size of the pores. The pores are formed here by foaming, which is caused by the heat treatment. This creates small bubbles that are separated from each other by small solid walls. The pores are formed by the foaming. Advantageously, this results in particularly high stability, strength and increase of the surface. This advantageously results in many areas of application in which the three-dimensional porous structure can be used particularly efficiently.

The use of a microwave and/or an oven for drying and/or heat treatment has been shown to be advantageous in terms of the effectiveness of the overall process. The use of microwaves and/or ovens is simple, efficient and particularly fast, which is advantageous for the process according to the invention as such.

In a further aspect, the invention relates to a porous or hierarchically porous three-dimensional structure produced by the method according to the invention.

Advantageously, the three-dimensional structure is highly detailed and is characterized by a compact, robust, stable and, in particular, durable composition. Furthermore, through possible fillers in the process according to the invention, the three-dimensional structure can be coupled with advantageous properties that enable many applications uses, for example, high or low thermal conductivity and/or electrical conductivity or insulation. Advantageously, the porous three-dimensional structure can also be adapted to individual geometric shapes by the process according to the invention and is thus not limited to solid structures.

In particular, hierarchical porous three-dimensional structures are extremely advantageous because they are lightweight due to the porosity but exhibit particularly pronounced stability and strength. In addition, hierarchical structures are relevant and advantageous in the inertization of material surfaces for low adhesion, for example, to be able to produce advantageous self-cleaning. Hierarchical structures are the subject of current research and, with the aid of the aspects according to the invention, it has been possible to establish progress in this area, in that it has become clear that, for example, it was possible to produce them by simply carrying out the process steps according to the invention.

In a further aspect, the invention relates to the use of the porous or non-porous three-dimensional structure. The porous parts or a hierarchical porous part can be used as a bone implant, in tissue engineering, for thermal insulation, fire prevention, heat protection, gas or blood filters, lightweight parts and/or catalyst supports or other scenarios where the porosity is necessary. The non-porous parts can be used as packaging, construction parts or other scenarios where the pores should be avoided.

A bone implant refers to a device used in a transplantation of a bone. In a bone grafting operation, a damaged or missing piece of bone is replaced by the bone implant comprising the porous three-dimensional structure according to the invention. Advantageously, the porous three-dimensional structure provides a good chance that the affected area will heal well, allowing the patient to use the bone as they normally would.

Tissue engineering is also a very modern field of research and includes tissue engineering and/or tissue engineering. Advantageously, the porous three-dimensional structure can be bioactively set up by the method according to the invention, for example, by using fillers such as calcium phosphate and/or hydroxyapatite, which is crucial for tissue engineering. Also, water glass itself shows potential biocompatible and bioactivity due to the similar composition as the commercial Bioglass^{®}, which is widely applied in the tissue engineering. Tissue engineering can artificially create biological tissue by the directed cultivation of cells on the porous three-dimensional structure, thereby replacing or regenerating diseased tissue in a patient. In particular, this eliminates the need for organ transplantation. Advantageously, patients are then no longer dependent on the removal and transplantation of their own body tissues from other, healthy body sites.

A blood filter refers to a device that is located between a unit and a patient with respect to the flow connection and is intended to retain blood and/or blood components such as blood clots, white blood cells and/or debris between the unit and the patient. This is relevant for measures to be carried out, for example, in the case of kidney diseases in the course of dialysis. Advantageously, the porous three-dimensional structure according to the invention can be formed in such a way as to filter blood and/or blood components particularly well.

Catalysts often comprise a catalyst support. The interaction between the catalyst and the catalyst support significantly determined the activity of the catalyst. Advantageously, the porous three-dimensional structure according to the invention can be adjusted in such a way that by-products are avoided in the reaction to minimize energy requirements and thus increase economic efficiency. In particular, a finely dispersive distribution of active centers and a very high mass transfer area can be advantageously provided.

Thermal insulation reduces the passage of thermal energy through an envelope to protect a space or body from cooling or heating. Advantageously, the porous three-dimensional structure can be formed in such a way that thermal conductivity can be regulated to provide specific thermal conduction or thermal insulation properties for respective functions.

Likewise, water-repellent material and/or even self-cleaning material can be provided, the latter for example, by forming hierarchical structures.

The advantageous embodiments of the porous three-dimensional structure, in particular with regard to the intended use, are due in particular to the composition of the gel and/or to the adaptable implementation of the individual steps of the process according to the invention.

Water glass is non-toxic. The three-dimensional structure allows food to be particularly well protected from external influences such as light, water vapor, contamination and damage. In addition, food packaging is said to protect against animal pests, microorganisms and the loss of flavours. In addition, the three-dimensional structure used as food packaging can make storage easier and faster reliably and suitably.

The option that fillers can be used also makes it very suitable for use as construction and engineering parts. For example, parts with unusual exterior geometry, hollow structures, can easily be produced. In the sense of the invention, a construction part preferably refers to a fundamental unit, which is manufactured as an independent unit, subsystem or subassembly, that can be joined or blended with other elements to form a more complex item. Construction parts with complex shapes can be achieved preferably by the process according to the invention. The process according to the invention gives developers and designers maximum geometric design freedom, and complexity only plays a minor role in the production costs. The costs can often even be significantly reduced due to lower material consumption. In addition, from an environmental and sustainability point of view, many possible suitable fillers can be used, for example, salt, sawdust, coffee and tea waste, cement, sand and/or clay.

Furthermore, the composition dependent solubility of water glass makes the reusing and recycling of the raw material possible. Overall, the process according to the invention could reduce the carbon footprint and cost of construction.

The aspects according to the invention will be explained in more detail below by means of examples, without being limited to these examples.

### FIGURES

### Brief description of the figures

- **Fig. 1**: Schematic representation of preferred process steps of the process according to the invention
- **Fig. 2**: Illustration of a preferred experimental procedure for gelation
- **Fig. 3**: Illustration of the additive manufacturing of the porous structure
- **Fig. 4**: SEM images after drying and heat treatment
- **Fig. 5**: SEM images in different scalings
- **Fig. 6**: Illustration of the compressive stress and strain rate of the printed porous structure

### Detailed description of the figures

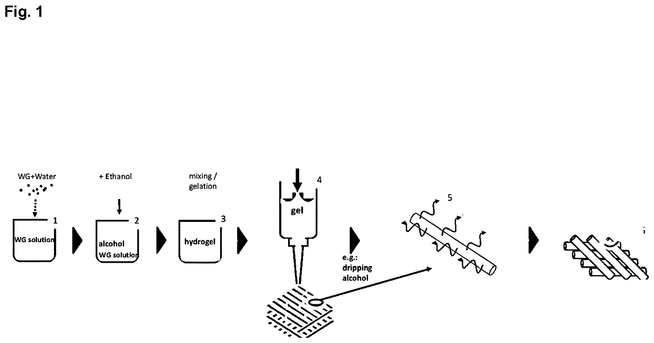

**Fig. 1** is a schematic representation of the preferred process steps of the process according to the invention, wherein the process steps are enumerated with numbers.

First, water glass is contacted with water to form a water glass-water solution (see 1). Water glass has proven to be particularly process-efficient, as it is advantageously very inexpensive. In the illustrated example, water glass comprises sodium silicate.

The water glass-water solution is then contacted with the first alcohol (see 2). In the present example, the first alcohol is ethanol. As a result, a gel is formed, particularly a hydrogel (see 3). It was surprising and very advantageous that a gel is formed without additional organic additives, which would be disadvantageous in terms of process efficiency, in particular, due to possible additional process steps (for example, to remove the organic additives) and further costs.

In particular, the gel is transferred to an additive manufacturing (see 4) device and subsequently printed. Another very beneficial and surprising effect of the gel was that it exhibited a shear-thinning behaviour which is very beneficial for 3D printing or additive manufacturing (synonymous terms), especially for robocasting. As a consequence of the shear-thinning behaviour, the build part advantageously solidifies quickly after extrusion under simple process conditions such as room temperature and ambient pressure. Additive manufacturing, in particular robocasting, can be used to produce complex, detailed, fine and/or particularly filigree components. For the time being, additive manufacturing provides a build part in the context of the invention.

After or during additive manufacturing, the build part is contacted with a second alcohol (see 5), which in the illustrated example is again ethanol. The build part is solidified by the second alcohol, ethanol in this case, since, in particular, water and ethanol components (portions of the first alcohol) are expelled.

Finally, drying and/or heat treatment is carried out to obtain a defined porosity (see 6). The drying and/or heat treatment can be carried out, for example, in a microwave and/or an oven. Advantageously, the preferred steps result in a hierarchical porous filament to obtain complex three-dimensional structures, in particular using additive manufacturing methods and/or extrusion-based processes.

**Fig. 2** shows an illustration of how gelation is preferably carried out. First, water glass (WG) and the first alcohol, present ethanol, are contacted with each other ("still"). Then they are shaken in a container, which leads to mixing ("shake"). Subsequently, waiting and gelation takes place, which can be detected by the increasing opacity ("aging"). Finally, the gel is obtained ("gel"), which can be used in further process steps. It was surprising how quickly the gel could form without having to apply additional additives of organic nature.

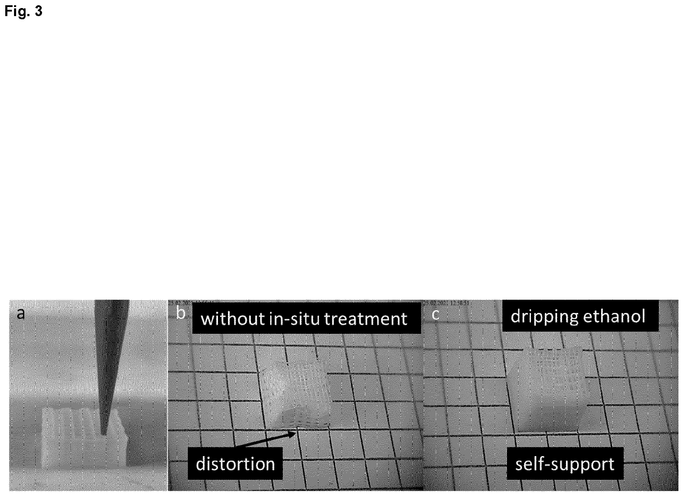

**Fig. 3** shows an illustration of the additive manufacturing of the porous structure.

Figure **3a** shows the printing process on itself with ethanol induced tricalcium phosphate loaded water glass hydrogel.

Figure **3b** shows half of a printed cube (dimensions: 5*10*10 mm³), where no second alcohol was used in-situ. It can be clearly seen that without contacting the second alcohol, deformation can result.

Figure **3c** shows the complete printed cube (dimensions: 10*10*10 mm³). Here, the advantageous self-supporting capacity can now be observed. The second alcohol (ethanol in this case) was introduced by dropping.

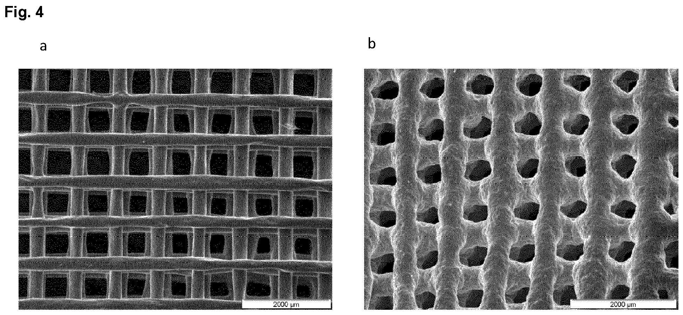

**Fig. 4** shows SEM (short for scanning electron microscope) images of the top view after drying and heat treatment. SEM image a shows the structure as dried and b as heated (at 450 °C for 2 hours) grid from hydrogel water glass (WG): ethanol (EtOH) (4:1) Tricalcium phosphate (TCP) [5 % (wt/wt)]. In picture b it can also be seen that foaming occurs due to the heat treatment and pores are formed as a result. Advantageously, the porosity can thus be specifically regulated by the heat treatment.

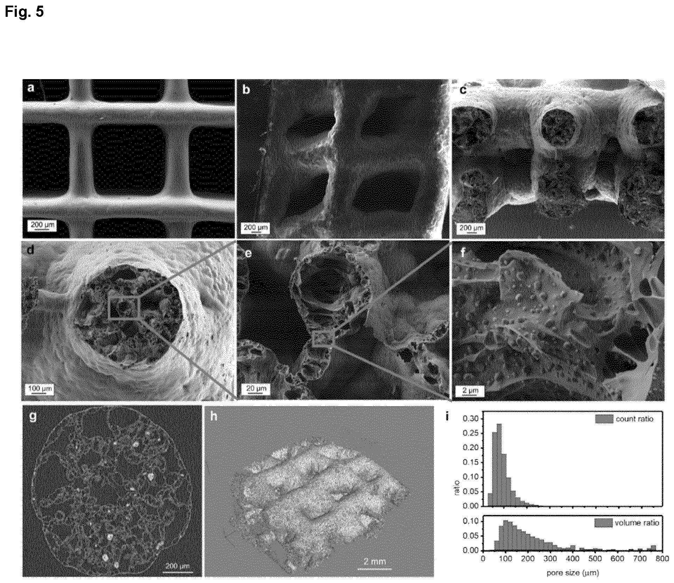

**Fig. 5** shows SEM images of the top view in different scaling.

The first two SEM images of the top view are of (a) as dried and (b) as heated (at 450 °C for 2 hours) grid from hydrogel WG: EtOH (4:1): TCP [5 % (wt/wt)].

SEM image (c) is across-section view; (d) a filament in the cross-section; (e) high magnification of porous wall; (f) shows a wall surface with nanocrystalline; (g) is tomographic slice of a foamy filament; (h) volume reconstruction of the foamy grid in 8 x 6.5 x 5 mm³ and (i) pore size distribution (equivalent spherical diameter) in the foamy grid in (h) with count ratio and volume ratio derived from the analysis of the found objects.

The hierarchically porous structures with three porosity and morphological levels have been realized. Combined with the observation in SEM images and the identification of the numbered found objects from the tomographic dataset, one can further confirm that the pores in the porous cell wall possess a distribution with a peak in 100 µm; the irregular pores surrounded by the porous cells possess a distribution with a peak in 400 µm and macropores offered by the filament interspace in the range of 650 - 800 µm.

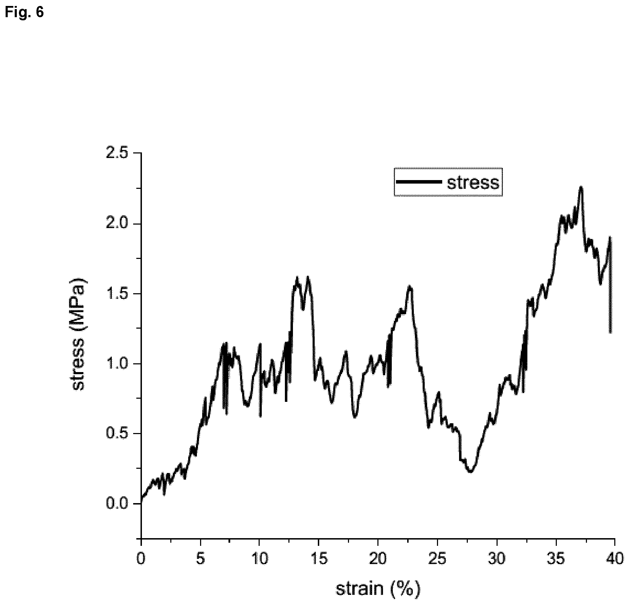

**Fig. 6** shows an illustration of the compressive stress and strain rate of the printed porous structure.

A printed cube (dimensions: 10*10*10 mm³) with a theoretical porosity of 0.8 was measured for a compression test and exhibited an excellent mechanical strength with a compressive strength of ca. 2.25 MPa, which was determined as the maximal value that the stress reached over the course of loading. After the start of loading, the compressive stress increases in a linear fashion until the first relative maximum. This first region is followed by a sawtooth development of the curve, initially with a further net increase in stress, followed by a plateau region where the average stress is fairly constant. The sawtooth development, consisting of repeated, alternating stress drops and increases, indicates an alternating sequence of cracking where stresses are concentrated, followed by a shift in loading to stronger, or more recently less loaded, regions where higher stresses can be supported.

### BIBLIOGRAPHY

Einarsrud, Mari-Ann, and Elin Nilsen. "Strengthening of water glass and colloidal sol based silica gels by aging in TEOS." Journal of Non-Crystalline Solids 226.1-2 (1998): 122-128.

Sarawade, Pradip B., et al. "Production of low-density sodium silicate-based hydrophobic silica aerogel beads by a novel fast gelation process and ambient pressure drying process." Solid State Sciences 12.5 (2010): 911-918.

Shao, Zaidong, et al. "Superhydrophobic sodium silicate based silica aerogel prepared by ambient pressure drying." Materials Chemistry and Physics 141.1 (2013): 570-575.

Ren, Xiaofeng, et al. "Novel sodium silicate/polymer composite gels for the prevention of spontaneous combustion of coal." Journal of hazardous materials 371 (2019): 643-654.

Liu, Dexin, Xingru Wu, and Ramadan Ahmed. "New silicate hydrogel with more elasticity as in-situ water diversion system: preparation and investigation of rheological and pugging behaviours." International Journal of Oil, Gas and Coal Technology 7.3 (2014): 263-274.

Ordoñez, Edisson, Jhon M. Gallego, and Henry A. Colorado. "3D printing via the direct ink writing technique of ceramic pastes from typical formulations used in traditional ceramics industry." Applied Clay Science 182 (2019): 105285.

## Claims

1. A method for producing a porous or non-porous three-dimensional structure comprising the following steps:
a) Contacting a silicate and water to form a silicate-water solution,
b) contacting the silicate-water solution with a first alcohol to form a gel, wherein the gel is a feedstock for an additive manufacturing apparatus and/or an extrusion-based process,
c) ejecting the gel layer by layer using the additive manufacturing apparatus and/or the extrusion-based process to form a three-dimensional build part with or without pores,
d) heating and/or drying the build part.

2. Method according to the previous claim
**characterized in that**
a second alcohol is introduced into the pores of the build part.

3. Method according to the previous claim
**characterized in that**
the silicate is selected from a group comprising alkali silicates described by a formula M₂O·nSiO₂, wherein M is selected from a group comprising alkali metals lithium (Li), sodium (Na), potassium (K), wherein the silicate is preferably selected from a group comprising water glass, wherein in the case of water glass M is selected from a group comprising sodium (Na), lithium (Li) and/or potassium (K).

4. Method according to one more of the preceding claims the previous **characterized in that**
- the silicate-water solution contains a proportion of the silicate in the range between 9 % and 45 %, preferably between 22.5% - 45 % based on the mass of the silicate-water solution
and/or
- the silicate has a ratio of silicon dioxide SiO₂ to an alkali metal oxide between 1.6 and 2.8, preferably between 2.4 - 2.8.

5. Method according to one or more of the preceding claims
**characterized in that**
fillers are added, wherein the fillers are in an amount of 1 vol.% to 60 vol.% in the silicate-water solution, wherein preferably the fillers comprise a material comprising ceramics, glasses, metals, carbon, wherein particularly preferred the fillers are in a shape of granulates, fibres and/or cubes.

6. Method according to one or more of the preceding claims
**characterized in that**
the water and the silicate are brought into contact with each other during a temperature range between 5°C - 70°C, preferably between 10°C - 30°C.

7. Method according to one or more of the preceding claims
**characterized in that**
the first alcohol is contacted with the silicate-water-solution, wherein the first alcohol has a proportion within a range between 20% - 50% with respect to the mass of a mixture comprising the silicate-water-solution and the first alcohol.

8. Method according to one or more of the preceding claims
**characterized in that**
the first alcohol in method step b) is selected from a group comprising ethanol, ethylene glycol (EG) triethylene glycol (TEG) and/or polyethylene glycol (PEG), Carboxylic acid ester (acetates), ketones.

9. Method according to one or more of the preceding claims
**characterized in that**
after contacting the silicate-water solution with the first alcohol, shaking and/or stirring of a container takes place, wherein the mixture comprising the silicate-water solution and the first alcohol is inside the container.

10. Method according to one or more of the preceding claims
**characterized in that**
the additive manufacturing apparatus applies the gel onto a build platform via an extrusion-based manufacturing and/or an extrusion-based additive manufacturing process, wherein preferably a temperature of the gel in the apparatus is at or about room temperature and a temperature of the build platform is up to 70° C.

11. Method according to one or more of the preceding claims
**characterized in that**
the second alcohol is introduced into the pores of the build part by dropping, spraying, soaking and/or with a bath, wherein the introduction of the second alcohol into the bath is parallel or after ejecting the gel using the additive manufacturing and/or the extrusion-based process.

12. Method according to one or more of the preceding claims
**characterized in that**
the second alcohol is selected from a group comprising ethanol, methanol and/or a combination of them.

13. Method according to one or more of the preceding claims
**characterized in that**
for drying and/or heating the build part is transferred into an oven and/or a microwave, preferably using a temperature of up to 500°C.

14. Porous three-dimensional structure or hierarchically porous three-dimensional structure produced by a method according to one or more of the preceding claims.

15. Use of the porous three-dimensional structure or the hierarchically porous three-dimensional structure by a method according to one or more of claims 1 - 13 as a bone implant, in tissue engineering, as food packaging, for thermal insulation, heat protection, water protection, blood filters and/or catalyst supports.
